# EUROPEAN PATENT APPLICATION

(11) **EP 2 308 810 A1**
(43) Date of publication of application: **13.04.2011**
(21) Application number: 10251646.5
(22) Date of filing: 24.09.2010
(51) Int. Cl.: C04B 35/565, C04B 35/584, C04B 35/80

(54) **Ceramic matrix composite system and method of manufacture**

(30) Priority: 24.09.2009 US 566316
(71) Applicant: United Technologies Corporation, Hartford, CT 06101 (US)
(72) Inventor: Newton, Kirk C., Enfield, CT 06082 (US); Kmetz, Michael A., Colchester, CT 06415 (US)
(74) Representative: Hall, Matthew Benjamin

(57) **Abstract**

A ceramic matrix composite is formed from a non-oxide ceramic and continuous ceramic fibres. The matrix includes a hafnium donor in the matrix in an amount sufficient to harden the composite at elevated temperatures to prevent ablation of the composite. The matrix also includes a boron donor in the matrix in an amount sufficient to lower the glass transition temperature of the composite to flow over cracks formed in the composite. The method to form the matrix is selected from polymer infiltration pyrolysis (15), chemical vapor infiltration (15), and sequential polymer infiltration pyrolysis and chemical vapor infiltration (15).

## Description

The present invention relates to a family of materials commonly referred to as non-oxide ceramic matrix composites (hereinafter CMC).

CMC materials are used in many applications where there is a hot structure in the presence of an air breathing or oxidizing environment, such as gas turbine blades, turbine exhaust systems, vanes, shrouds, liners, hypersonic vehicles where the leading edge is in an oxidizing environment, and the like.

These materials are typically comprised of a matrix phase composed of a non-oxide ceramic such as silicon carbide (SiC), silicon nitride (Si₃N₄) or mixed ceramic phases such as silicon carbo-nitride (SiNC). The matrix phases are reinforced with continuous ceramic fibres, typically SiC type such as Nicalon^{™} CG grade, Hi Nicalon^{™}, Nicalon^{™} type-s, Ube^{™}, or Sylramic^{™}, etc. These materials may or may not be stoichiometric or completely crystalline. The presence of less or more than a full stoichiometric amount simply means that there is an excess of one or the other of silicon or carbon, creating, for example, zones of amorphous materials.

CMC mechanical properties, particularly fracture toughness and controlled failure behavior, are highly dependant on the fibre/matrix interface. A fibre interface coating is typically used to create an intentionally weak bond between the matrix and the fibre that enables crack deflection and fibre pullout during mechanical loading. These mechanisms provide the characteristic fracture toughness and high strength of a CMC compared to monolithic ceramic materials. In CMCs, the fibre interface coating may be chemical vapor deposited (CVD) boron nitride.

These composite materials typically degrade in use at elevated temperature through the existence of or formation of micro-cracks in the ceramic matrix that allow ingress of oxygen and moisture that then react with the exposed interface coating on the fibres. When the BN based interface coating reacts with oxygen and/or moisture, it forms a B₂O₃ glass phase that bonds the matrix to the fibre and reduces composite behavior in the CMC. As this mechanism continues to propagate over many thermal/mechanical cycles, new micro cracks are formed and more areas react until the bulk of the CMC structure no longer exhibits composite toughening and thus fails catastrophically.

Improved BN interface coating systems have been shown to reduce the rate of this reaction, such as Si doped BN and multi-layer coating systems that include CVD deposited protective layers on the BN such as SiC or Si₃N₄. While these systems improve CMC life, they still allow ingress of oxygen to the fibre interface coating and allow some reaction with the BN.

In combustion environments containing O₂ CO₂ and H₂O, SiC based ceramics can oxidize by any or all of the following reactions.

SiC + 3/2 O₂(g) = SiO₂ + CO(g)

SiC + 3CO₂(g) = SiO₂ + 4CO(g)

SiC + 3H₂O(g) = SiO₂ + 3H₂(g) + CO(g)

In environments where the resulting SiO₂ layer is stable, it protects the base SiC from further degradation. This protection mechanism works well in isothermal situations with relatively low water vapor content due to the extremely low oxygen diffusion rate for SiO₂. Under cyclic thermal loading, the silica layer is compromised during cooling due to coefficient of expansion (CTE) mismatch and the crystallization of the amorphous SiO₂ layer and subsequent high/low quartz phase change. Upon reheating, more base SiC is consumed to replenish the cracks in the silica protection layer. In environments that contain high concentrations of water vapor, the SiO₂ layer can react and form volatile hydroxides or oxy hydroxides, leading to depletion of the protective oxide surface. The silica protective layer is also susceptible to ablative loss in high velocity gas streams found in propulsion applications when operating temperatures are above the glass transition temperature (1175 °C) due to reduced viscosity.

In SiC based CMC materials, the silica protection mechanism is the primary defense against oxidation and oxygen and moisture ingress, but the impact of cyclic thermal loading is amplified by the more critical oxidation of the interface coating that occurs before a continuous silica phase is formed across the surface and seals the microcracks. -

An additional rapid degradation mechanism called pesting can occur in CMC materials when the system is operated at temperatures/conditions that result in micro-cracks in the matrix and degrades the interface coating, but are not hot enough to form a complete silica protective layer.

A self sealing matrix material would be one way to reduce oxygen ingress into the CMC and thus reduce or slow interface coating attack.

The present application discloses a self sealing matrix material that can effectively seal surface cracks across a very broad temperature range and operating environments. In its simplest form, the present invention comprises the use of a hafnium donor and a boron donor in the SiC based CMC materials that are applied to at least some of the surfaces that are subjected to elevated temperatures.

Thus, viewed from a first aspect, the present invention provides a ceramic matrix composite comprising: a matrix formed from a non-oxide ceramic and a ceramic fibre; a hafnium donor in the matrix in an amount sufficient to harden the composite at elevated temperatures to prevent ablation of the composite; and a boron donor in the matrix in an amount sufficient to lower the glass transition temperature of the composite to flow over cracks formed in the composite.

In accordance with a preferred embodiment, the present invention provides a ceramic matrix composite comprising: a matrix formed from a non-oxide ceramic selected from the group consisting of silicon carbide, silicon nitride, silicon carbo-nitride and mixtures thereof and continuous ceramic fibres formed from silicon carbide; a hafnium donor in the matrix selected from the group consisting of hafnium carbide, hafnium diboride and mixtures thereof in an amount sufficient to harden the composite at elevated temperatures to prevent ablation of the composite; and a boron donor in the matrix selected from the group consisting of boron carbide, hafnium diboride and mixtures thereof in an amount sufficient to lower the glass transition temperature of the composite to flow over cracks formed in the composite.

Viewed from a second aspect, the present invention provides a method of forming a ceramic matrix composite, the method comprising: forming a matrix formed from a non-oxide ceramic and a ceramic fibre; adding a hafnium donor in the matrix in an amount sufficient to provide a hardened composite at elevated temperatures to prevent ablation of the composite; adding a boron donor in the matrix in an amount sufficient to provide a lower glass transition temperature of the composite adapted to flow over cracks formed in the composite; and subjecting the matrix to a method selected from polymer infiltration pyrolysis, chemical vapor infiltration, and sequential polymer infiltration pyrolysis and chemical vapor infiltration, and the hafnium donor and the boron donor are added during formation thereof.

A CMC system consists of a modified SiC based matrix chemistry and methods of forming said matrix chemistry that improve the system level environmental resistance and self sealing properties of the matrix. The incorporation of hafnium diboride (HfB₂), boron carbide (B₄C) and/or hafnium carbide (HfC) phases dispersed within the non-oxide SiC type matrix modifies the protective oxide layers formed and improve matrix crack sealing properties.

These phases can be included in the matrix as fine and/or colloidal powders introduced during matrix densification, derived from the preceramic polymer used for polymer infiltration pyrolysis (PIP) processing and/or codeposited during chemical vapor infiltration (CVI) of the composite matrix.

Certain preferred embodiments of the present invention will now be described in greater detail by way of example only and with reference to the accompanying drawings, in which:
FIGURE 1 is a block diagram of a first embodiment of this invention;
FIGURE 2 is a block diagram of a second embodiment of this invention; and
FIGURE 3 is a block diagram of a third embodiment of this invention.

The present invention includes additions to SiC based CMC's that enable improvement of typically contrary properties. In order to reduce pesting (the formation of cracks where the temperature is not high enough to reseal the surface) in CMC systems, the matrix forms a glass phase at a low enough temperature and with low enough viscosity to allow sufficient flow to fill and seal cracks to reduce/mitigate oxygen or moisture ingress to the fibre interface coating.

Boron additions to SiC allow the formation of borosilicate glass which exhibits a lower glass transition temperature (700 °C to 800 °C depending on composition) compared to 1175 °C for pure SiO₂. Borosilicate glass phases also exhibit broad viscosity vs temperature behavior, enabling self sealing behavior without significantly increasing ablative loss in high velocity gas streams. The boron donor functions to lower the glass transition temperature of the composite to allow it to flow over cracks that may be formed in the composite. -

The inclusion of Hf species (HfB₂ and HfC) improves the refractory performance of SiC at the high temperature end of the spectrum (above 1400 °C) where reduced silica viscosity and accelerated hydrolysis of silica in the presence of water vapor limits life. Hafnium forms a very stable, refractory oxide. The hafnium donor hardens the composite at elevated temperatures to prevent ablation of the composite.

CMC materials and components can be fabricated utilizing a variety of methods and processing step sequencing, as long as the critical features of the CMC system are incorporated, i.e. a ceramic fibre perform with application appropriate fibre architecture and volume percent, an interface coating on the ceramic fibres, typically CVD applied BN, Si doped BN, or multilayer systems of BN and SiC or BN and Si₃N₄ followed by matrix densification via CVI, PIP, slurry infiltration, or a combination therein. The traditional approach for CMC fabrication, typically used for CVI composites, includes formation of the fibre preform held together in graphite tooling prior to CVD deposition of the interface coating on the fibres and subsequent matrix densification. Alternately, the interface coating can be applied to the fabric prior to preform layup and matrix densification performed using PIP or CVI methods. The present disclosure is compatible with all CMC known fibre types, preforming methods and typical interface coating systems.

The PIP process for CMC fabrication has the advantage of being able to take advantage of proven processes, such as resin transfer molding (RTM), prepreg layup, and the like that have been extensively learned out in traditional polymer composites manufacturing. These processes have been successfully automated to produce high quality/quantity composites at low costs. In the PIP process, a coated fibre preform is first impregnation with an inorganic polymer to form a "green body". The fabrication of this green body utilizes established manufacturing techniques that are employed in the mass production of polymer matrix composites such as the previously mentioned RTM, pre-preg layup, and vacuum bagging. The green body is then pyrolysed in a controlled atmosphere to convert the polymer to a ceramic char. In this process only around 70 % to 80 % of the polymer is converted to a ceramic material. Therefore, multiple impregnation and pyrolysis cycles (such as 9 to 12 cycles) are needed to obtain a desired high density of 90% to essentially 100%. In addition, the evolution of gas species during the polymer to ceramic convention process produces, an appreciable amount of open porosity. This open porosity provides a pathway into the composite for unwanted oxidation. Still, one of the highlights of the PIP process is the ability to use conventional methods like injection molding and RTM process to manufacture the green body. This technology is well known from the plastic industry and is easily adapted to inorganic polymers. This process provides the ability to form reproducible complex shapes and sizes.

The CVI approach to CMC fabrication has the advantage of producing a highly dense, crystalline matrix. This results in improved performance and lends itself to advanced manufacturing concepts that incorporate coatings or self-sealing systems into the manufacturing process via changes in or additions to the deposition precursor gases used during the process. As is known in the art, in the traditional CVI process, ceramic cloth is layed-up and compressed in graphite tooling to create a dry fibre preforms, followed by the deposition of the interface coating. When considering large or complex composites, complex and costly graphite tooling is typically required to ensure proper fibre volume fraction and perform shape, while allowing uniform CVI infiltration for the interface coating and CVI matrix. This tooling is designed to be reusable, but due to the nature of the CVD process, its lifetime is limited to a finite number of components that is significantly shorter that tooling used in PIP processing. This method does not allow full utilization of PMC composite perform fabrication techniques and adds to production costs.

In addition, it is within the scope of this invention to combine PIP and CVI processing. By combining the two approaches, it is possible to incorporate the efficiency of automation and large volume production of PIP processing to form a complex shape, free standing CMC body, then complete the matrix infiltration with a CVI process to achieve the enhanced properties of a CVI CMC with a low cost /high volume process. The number of PIP cycles used, and the subsequent amount of CVI infiltration that is preformed is dependant on the application and the desired properties. The technique can be used to form an essentially 100% CVI based composite, or conversely used to add some environmental protection to a PIP based CMC through infiltration of the micro-porosity in the matrix.

The present invention includes the incorporation of a hafnium donor and a boron donor into the matrix fabricated via CVI and/or PIP methods. Both elemental species are essential for the present invention. The hafnium and boron donors, such as hafnium diboride (HfB₂), boron carbide (B₄C) and/or hafnium carbide (HfC), are dispersed within the non-oxide SiC type matrix to modify the protective oxide - layers formed and improve matrix crack sealing properties. The amount of SiC in the composite may range from about 95 atomic percent to about 40 atomic percent, with the balance being the hafnium and boron donors. The amount of hafnium donor may range broadly from about 5 to 60 atomic percent, or 10 to 50 atomic percent. The amount of hafnium donor may also range from about 25 to about 40 atomic percent. The amount of boron donor may range from about 1 to about 25 atomic percent, or from about 3 to about 18 atomic percent. The amount of boron donor may also range from about 8 to about 15 atomic percent. These donors are added to the composite when it is formed by either PIP or CVI processes. In one embodiment, HfB₂ can be used to provide both the hafnium donor and the boron donor, without needing to oxidize the carbon atoms present if HfC and B₄C are both used.

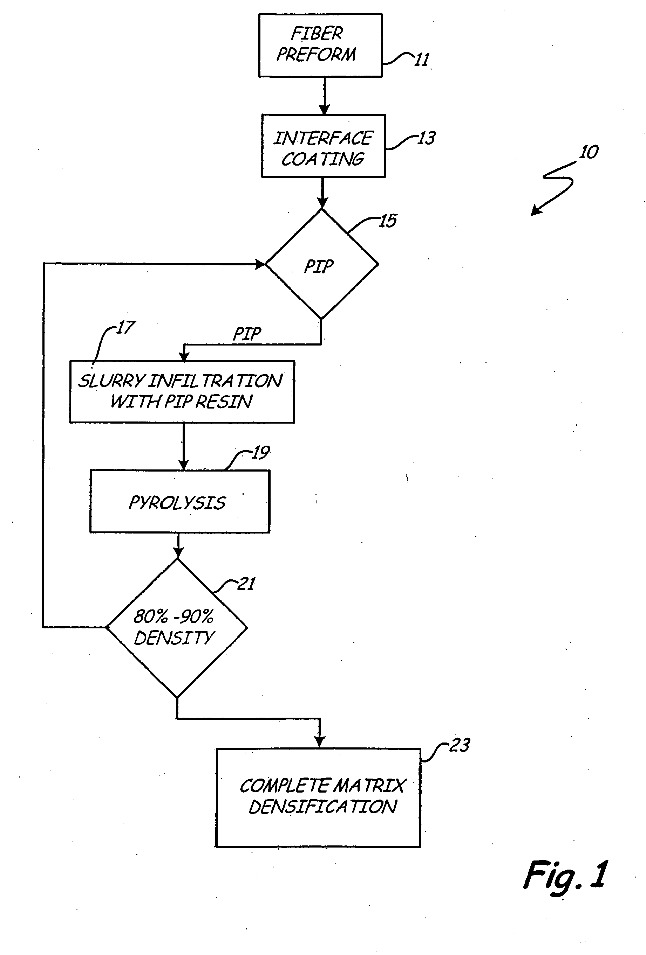

Figure 1 illustrates the method 10 of the present application in one embodiment using the PIP method. A fibre preform is formed in step 11 using conventional commercial techniques and is given a interface coating in step 13. The fibre preform is ready for matrix infiltration by the PIP method in step 15.

In this embodiment, a slurry is formed and infiltration with the PIP resin is done in step 17. 10% to 50% by weight, of the hafnium and boron donors, based on the weight of the pre-ceramic polymer, are dispersed in the pre-ceramic powder prior to infiltration into the ceramic preform from step 13. Distribution of this powder, such as HfB₂ or a mixture of HfC and B₄C, can further be controlled by dilution of the polymer resin by adding more solvent to thin out the amount of ceramic formed by the polymer resin and get more ceramic filler into the fibre. Also, a fine particle size, such as micron or even sub micron size, improves homogeneity within the composite. Alternatively, the ceramic powder slurry can be infiltrated with a water or solvent based slurry and a binder.

This step is followed by pyrolisis in step 19 to reduce the polymer to a ceramic char as describe above. The composite is removed and the density of the donor content is measured in step 21. If it is less than about 80%, the composite is returned to step 15, where, in a strictly PIP process, it passes through steps 17 and 19, and then again the density is determined in step 21. Once the density reaches 90% or more, and even close to 100%, it is removed in step 23 as a complete composite and is ready for use in an appropriate environment such as, by way of example and not as a limitation, the aforementioned air breathing or oxidizing environment, such as gas turbine blades, turbine exhaust systems, vanes, shrouds, liners, hypersonic vehicles where the leading edge and other portions is in an oxidizing environment, and the like.

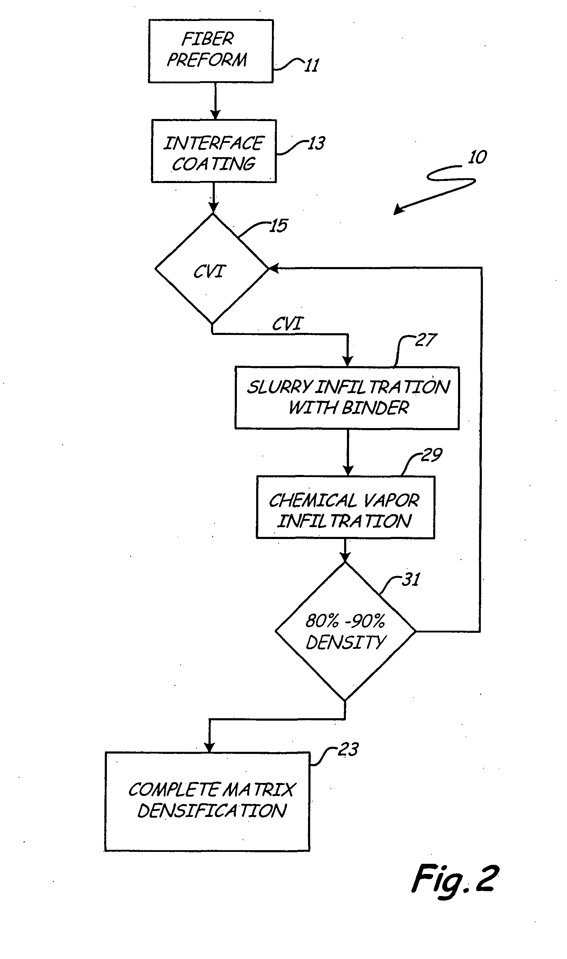

Figure 2 illustrates how the CVI process may be used in a similar manner. The fibre preform is ready for matrix infiltration using the CVI process proceeds to form an infiltration slurry with a binder in step 27, again using the slurry as describe in step 17 of Figure 1, followed by chemical vapor infiltration in step 29, as described above in a conventional manner. As noted above, the hafnium and boron donor materials have been added in step 27. Again, the density is measured in step 31 and the composite is returned to step 27 or removed in step 23. In the CVI process, the final density can be achieved on one slurry infiltration, or stopped with sufficient open porosity to allow subsequent slurry infiltrations to create a more intermixed matrix.

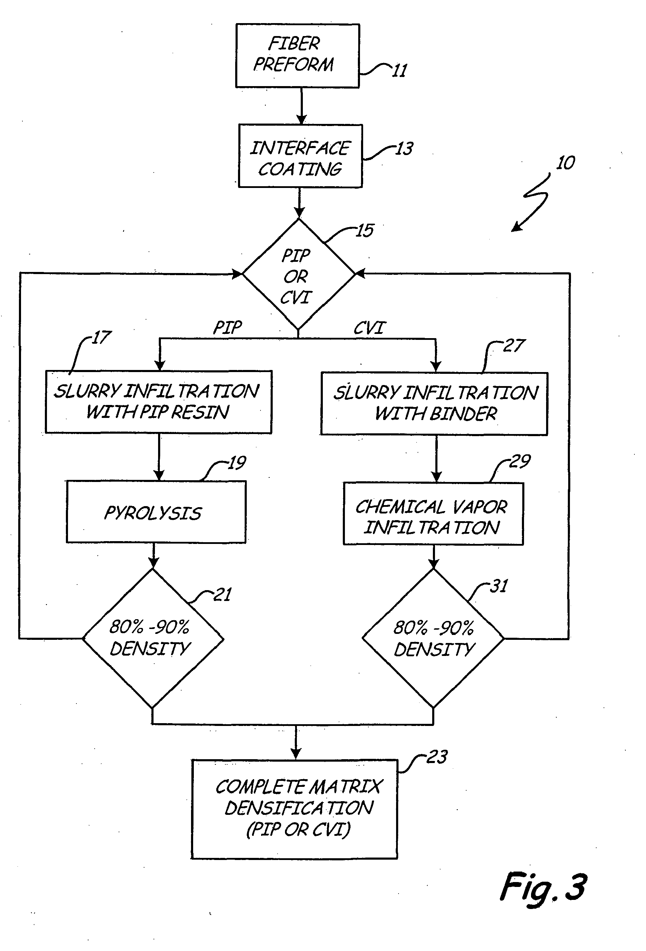

In Figure 3, the composite is subjected to both PIP and CVI treatment in sequence, beginning with either PIP or CVI, and sequentially treated until the density of the composite is satisfactory. In this embodiment, the composite formed in step 13 with the hafnium and boron donors is sent by step 15 first through steps 17 and 19, then returned to step 15 to be sent to steps 27 and 29. This can be repeated as many times as needed to have the desired final product.

In all cases, whether the CMC is formed by PIP or CVI or both, or by other methods, the CMC of this invention is capable of withstanding temperatures of above 1400 °C for substantially longer periods of time than untreated CMC materials because the composite is self healing. At lower temperatures of about 800 °C, the boron donor lowers the glass transition temperature of the composite and causes it to flow into and seal cracks formed by, for example, cyclic heating and cooling. At elevated temperatures of above 1175 °C, the hafnium donor increases the hardness of the surface of the composite, thus substantially reducing the ablative loss due to burning and erosion.

Although the present invention has been described with reference to preferred embodiments, workers skilled in the art will recognize that changes may be made in form and detail without departing from the scope of the invention as defined in the accompanying claims.

## Claims

1. A ceramic matrix composite comprising:
a matrix formed from a non-oxide ceramic and a ceramic fibre;
a hafnium donor in the matrix in an amount sufficient to harden the composite at elevated temperatures to prevent ablation of the composite; and
a boron donor in the matrix in an amount sufficient to lower the glass transition temperature of the composite to flow over cracks formed in the composite.

2. The composite of claim 1, wherein the hafnium donor is selected from the group consisting of hafnium carbide, hafnium diboride and mixtures thereof.

3. The composite of claim 2, wherein the amount of hafnium donor ranges from about 5 atomic percent to about 60 atomic percent.

4. The composite of claim 1, 2 or 3 wherein the boron donor is selected from the group consisting of boron carbide, hafnium diboride and mixtures thereof.

5. The composite of claim 4, wherein the amount of boron donor ranges from about 1 atomic percent to about 25 atomic percent.

6. The composite of any preceding claim, wherein the non-oxide ceramic is selected from the group consisting of silicon carbide, silicon nitride, silicon carbo-nitride and mixtures thereof.

7. The composite of any preceding claim, wherein the ceramic fibre is formed from continuous silicon carbide fibre.

8. The composite of any preceding claim, wherein the matrix density of the boron and hafnium donors is at least 90%.

9. A method of forming a ceramic matrix composite, the method comprising:
forming a matrix formed from a non-oxide ceramic and
a ceramic fibre;
adding a hafnium donor in the matrix in an amount sufficient to provide a hardened composite at elevated temperatures to prevent ablation of the composite;
adding a boron donor in the matrix in an amount sufficient to provide a lower glass transition temperature of the composite adapted to flow over cracks formed in the composite; and
subjecting the matrix to a method selected from polymer infiltration pyrolysis, chemical vapor infiltration, and sequential polymer infiltration pyrolysis and chemical vapor infiltration, and the hafnium donor and the boron donor are added during formation thereof.

10. The method of claim 9, wherein the hafnium donor is selected from the group consisting of hafnium carbide, hafnium diboride and mixtures thereof, and preferably wherein the amount of hafnium donor ranges from about 5 atomic percent to about 60 atomic percent.

11. The method of claim 9 or 10, wherein the boron donor is selected from the group consisting of boron carbide, hafnium diboride and mixtures thereof, and preferably wherein the amount of boron donor ranges from about 1 atomic percent to about 25 atomic percent.

12. The method of any of claims 9 to 11, wherein the non-oxide ceramic is selected from silicon carbide, silicon nitride, silicon carbo-nitride and mixtures thereof.

13. The method of any of claims 9 to 12, wherein the composite is formed by polymer infiltration pyrolysis, and the hafnium donor and the boron donor are added during formation thereof to achieve essentially 90% matrix density.

14. The method of any of claims 9 to 12, wherein the composite is formed by chemical vapor infiltration, and the hafnium donor and the boron donor are added during formation thereof to achieve essentially 90% matrix density.

15. The method of any of claims 9 to 12, wherein the composite is formed by sequential polymer infiltration pyrolysis and chemical vapor infiltration, and the hafnium donor and the boron donor are added during formation thereof to achieve essentially 90% matrix density.
